Europäisches Patentamt

(19) European Patent Office

Office européen des brevets

(11) Veröffentlichungsnummer: **0 043 151**
**B1**

(12) **EUROPÄISCHE PATENTSCHRIFT**

(45) Veröffentlichungstag der Patentschrift:
22.02.84

(51) Int. Cl.³: **H 04 L 7/04**, H 04 J 3/06

(21) Anmeldenummer: 81200638.5

(22) Anmeldetag: 11.06.81

(54) Anordnung zur Verarbeitung serieller Information, die mit Synchronisationswörtern versehen ist.

(30) Priorität: 16.06.80 NL 8003477

(43) Veröffentlichungstag der Anmeldung:
06.01.82 Patentblatt 82/1

(45) Bekanntmachung des Hinweises auf die Patenterteilung:
22.02.84 Patentblatt 84/8

(84) Benannte Vertragsstaaten:
DE FR GB

(56) Entgegenhaltungen:
DE - A - 2 944 191
FR - A - 2 440 662

ELECTRONICS AND COMMUNICATIONS IN JAPAN,
Band 56-A, Nr. 1, 1973, Seiten 9-18 New York, U.S.A. R.
MARUTA: "On a design method for frame sync
stabilizers"

(73) Patentinhaber: N.V. Philips' Gloeilampenfabrieken,
Groenewoudseweg 1, NL-5621 BA Eindhoven (NL)

(72) Erfinder: Carasso, Marino Giuseppe, c/o INT.
OCTROOIBUREAU B.V. Prof. Holstlaan 6, NL-5656 AA
Eindhoven (NL)
Erfinder: Nijboer, Jakob Gerrit, c/o INT.
OCTROOIBUREAU B.V. Prof. Holstlaan 6, NL-5656 AA
Eindhoven (NL)

(74) Vertreter: Strijland, Wilfred et al, INTERNATIONAAL
OCTROOIBUREAU B.V. Prof. Holstlaan 6, NL-5656 AA
Eindhoven (NL)

**Anordnung zur Verarbeitung serieller Information, die mit Synchronisationswörtern versehen ist**

Die Erfindung betrifft eine Anordnung zum synchronisierten Lesen eines seriellen Mediums, das digitale Information in Form einer Reihe von Datenwörtern mit untereinander gleichen Längen und jeweils von einer gleichen Anzahl von $n$ Datenwörtern (D0 ... D7) getrennter Synchronisationswörter (S) enthält, mit einem seriellen Speicher zum Aufnehmen der Datenwörter und Synchronisationswörter von dem Medium in eine Folge von Teilspeichern, mit an den seriellen Speicher angeschlossenen Detektormitteln, um jeweils eine ungerade Anzahl $k \geqq 3$ von direkt aufeinanderfolgenden und einwandfrei erhaltenen, in ungestörtem Zustand einander entsprechenden und von allen in Datenwörtern zulässigen Muster abweichenden Synchronisationswörtern zu detektieren, und mit an die Detektormittel angeschlossenen Mehrheitsentscheidungsmitteln, die durch eine Mehrheitsentscheidung zwischen diesen $k$ Synchronisationswörtern ein Synchronisationssignal erzeugen, das bis zum Erzeugen des nächsten Synchronisationssignals gültig ist.

Eine derartige Anordnung ist aus der DE-A1-2 944 191 bekannt. Für den Fall $k = 3$ hat die bekannte Anordnung einen seriellen Speicher mit einer Kapazität für drei Synchronisationswörter und $3n$ Datenwörter. Eingang bzw. Ausgang des seriellen Speichers sind an deren Enden vorhanden.

Es ist die Aufgabe der Erfindung, die Kapazität des seriellen Speichers und die darausfolgende Verzögerung der Daten möglichst klein zu halten und den Einfluß einer Fehlsynchronisation bis auf möglichst kurze Strecken des Datenstromes einzuschränken. Die Aufgabe wird erfindungsgemäß dadurch gelöst, daß die genannten Folge von Teilspeichern besteht aus einem ersten Teilspeicher zum Aufnehmen eines Synchronisationswortes, aus einer geraden Zahl $(k-1)$ seriell angeschlossener Teilspeicher zum Aufnehmen jeweils eines vorhergehenden Synchronisationswortes und der zwischen jeweils zwei aufeinanderfolgenden Synchronisationswörtern liegenden Datenwörter und aus einem Ausgangsteilspeicher zum Aufnehmen von $p$ Datenwörtern, mit $p$ als der nächsten ganze Zahl von $n/2$, wobei der Ausgang des Ausgangsteilspeichers den Ausgang des seriellen Speichers bildet, der mit einem Serien-Parallel-Wandler verbunden ist, der durch das Synchronisationssignal der Mehrheitsentscheidungsmittel über einen Zeitbestimmer gesteuert wird.

Es ist vorteilhaft, wenn die Detektormittel einen Zähler enthalten, der für die Mehrheitsentscheidung über $k$ Synchronisationswörter durch die Detektion des frühest erhaltenen Synchronisationswortes gestartet wird und eine Zykluslänge hat, die der Länge von $n$ Datenwörtern plus einem Synchronisationswort entspricht und dessen Vollzählsignal als Detektionssignal des am frühesten erhaltenen Synchronisationswortes der Folge von $k$ Synchronisationswörtern den Mehrheitsentscheidungsmitteln zugeführt wird.

Insbesondere wenn $n$ einen hohen Wert hat, bedeutet dies eine Ersparung in der Anzahl erforderlicher Bauelemente: Durch einen Zähler mit einer beschränkten Kapazität wird eine Vielzahl von Schieberegisterstufen überflüssig.

Die Erfindung wird nachstehend an Hand der Zeichnungen näher erläutert. Es zeigt

Fig. 1 ein Beispiel einer vorteilhaften Modulation der Information,

Fig. 2 ein Informationsformat,

Fig. 3a, 3b Blockschaltbilder einer Anordnung zur Bildung der Information für die Speicherung,

Fig. 4 ein allgemeines Blockschaltbild für eine Leseanordnung für eine Audioplatte,

Fig. 5 ein Blockschaltbild einer Synchronisationsanordnung,

Fig. 6 mögliche Synchronisationszustände.

Die bevorzugte Ausführungsform der erfindungsgemäßen Anordnung bezieht sich auf die Verwendung bei digitaler Tonspeicherung auf einer sog. Kompaktplatte. Die Technologie der Datenspeicherung auf der Platte, die Techniken zum Verfolgen der Datenspuren und zur Extraktion der Daten aus der Datenspur sind aus der DE-A-21 09 877 bekannt. Diese Offenlegungsschrift betrifft dabei die aufeinanderfolgende Speicherung von Daten beispielsweise Sektor für Sektor, je nach der Darstellung dieser Information. Etwas ähnliches erfolgt in einem automatisierten Bürosystem. Das Ausführungsbeispiel bezieht sich auf eine vorgespielte Platte, die nach den in der Schallplattenindustrie üblichen Techniken gefertigt ist. Die Umgebung der Erfindung weicht in zwei Punkten wesentlich von den herkömmlichen Schallplatten ab: Die Informationsdichte je Plattenoberfläche ist viel größer, und die Aufzeichnung ist digital.

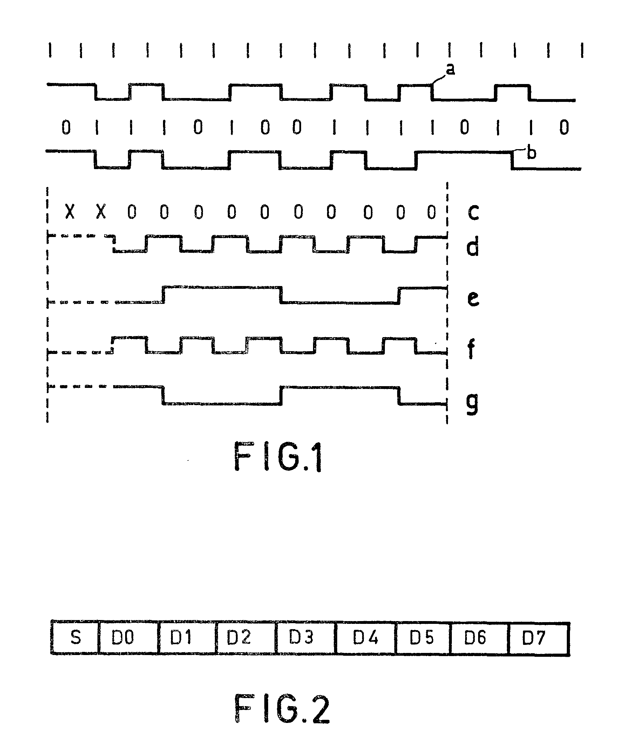

In diesem Zusammenhang zeigt Fig. 1 ein Beispiel einer vorteilhaften Informationsmodulation auf Bitebene. Das Medium der Platte ist flach, während durch die Bearbeitung selektiv vertiefte tangential verlaufende streifenförmige Gebiete angebracht sind. Die Normalebene indiziert den binären Wert »0«; die vertiefte Ebene den Wert »1« des Signals oder umgekehrt. Das Auslesen erfolgt auf optischem Wege. Bei a) ist das Modulationsmuster einer sog. Miller-Modulation angegeben. Die Grenzen der Bitzellen sind durch vertikale Striche angegeben, und der Informationswert ist auf der nächst niedrigeren Zeile aufgetragen. Die Modulationsregel ist wie folgt: eine logische »1« ergibt einen Übergang in der Mitte der Bitzelle. Eine logische »0« ergibt einen Übergang am Ende einer Bitzelle unter der Bedingung, daß auch die folgende Bitzelle eine »0« enthält. In Fig. 1a ist also das mögliche Auftreten einer Vertiefung in der Platte angegeben.

Bei b) ist eine geänderte Miller-Modulation angegeben, wie sie mit den weiteren Einzelheiten in einer am gleichen Tage wie die vorliegende Patentanmeldung eingereichten niederländischen Patentanmeldung 810 223 der Anmelderin mit dem Titel »Verfahren zum Codieren von Datenbits auf einem Aufzeichnungsträger, Anordnung zur Durchführung des Verfahrens und Aufzeichnungsträger mit einer Informationsstruktur« beschrieben ist. Diese Modulation entspricht im großen und ganzen der nach Fig. 1a, jedoch mit diesem Unterschied: bei einer direkten Aufeinanderfolge einer geraden Anzahl (2, 4, 6 . . .) logischer »1«-Bits werden die Übergänge der letzten zwei »1«-Bits unterdrückt und durch einen einzigen Übergang auf der Grenze zwischen diesen letzten zwei »1«-Bits ersetzt. Die Anzahl der Übergänge verkleinert sich so. Weiter wird der Anteil an Niederfrequenzkomponenten im Signalspektrum stark herabgesetzt. Auf der Zeile 1a ist der kleinste Abstand zwischen zwei aufeinanderfolgenden Signalübergängen gleich einer Bitzelle und der größte Abstand gleich zwei Bitzellen. Auf Zeile b ist der kleinste Abstand wieder gleich einer Bitzelle und der größte jedoch gleich drei Bitzellen. Letzteres entsteht beispielsweise im Fall 0110110. Das Ausführungsbeispiel benutzt die zweite Modulationsform. In Fig. 1b bezieht es sich dabei auf die Datenwörter. Die Modulation der Synchronisationswörter wird nachstehend beschrieben (Zeilen c bis g). Es sei noch darauf hingewiesen, daß in der obigen Beschreibung ein Datenbit je Bitzelle vorhanden ist, das in zwei Codebits übersetzt wird, weil sowohl auf dem Rand als auch in der Mitte der Bitzelle ein Signalübergang auftreten kann.

In Fig. 2 ist das Format der Information angegeben. Zunächst kommt ein Synchronisationswort S von 12 Bits. Es folgt dann eine Reihe von 8 Datenwörtern. Sie enthalten alle 21 Bits. Bei der Bildung der Datenwörter wird jeweils eine akustische Informationseinheit in 14 Datenbits angeordnet. Dieser Einheit werden anschließend 7 Paritätsbits zugesetzt, wodurch eine bestimmte Fehlerkorrekturmöglichkeit geschaffen ist. Die Erfindung bezieht sich nicht auf den Fehlerkorrekturmechanismus innerhalb eines einzigen Datenwortes. Das in Fig. 2 dargestellte Intervall wird mit Rahmen bezeichnet und besitzt also eine Länge von $8 \times 21 + 12 = 180$ Bitzellen. Auf der Platte befindet sich entlang einer Spur also eine Reihe derartiger aufeinanderfolgender Rahmen. Es sind auch andere Formate und Wortlängen in bestimmten Fällen vorteilhaft. Die Erfindung ist auch bei anderen Informationsmedien, wie einer Datenverbindung, verwendbar.

Für die Speicherung werden die Datenbits der Datenwörter moduliert, wie dies bei Fig. 1, Zeile b, beschrieben wurde. In Fig. 1, Zeile c, ist jetzt der Inhalt eines Pseudosynchronisationsworts S nach Fig. 2 gegeben, wie es für die Modulation der Datenwörter seiner Information zugesetzt wird. Es besteht aus zwei Funktionsbits xx, die einen Wert haben können, um so eine Steuerinformation zu bilden, sowie 10 logische »0«-Bits. Das Ergebnis der Modulation des Pseudosynchronisationsworts ist in Fig. 1, Zeilen d und f, dargestellt. Diese zwei sind gegenseitig invertiert, wobei das Endergebnis von den Werten der zwei Funktionsbits und von dem Signalzustand am Anfang des Pseudosynchronisationsworts abhängig ist. Der Einfluß und die Wirkung des Funktionsbits werden der Kürze halber nicht und Fig. 1, Zeilen e und g, werden weiter unten beschrieben.

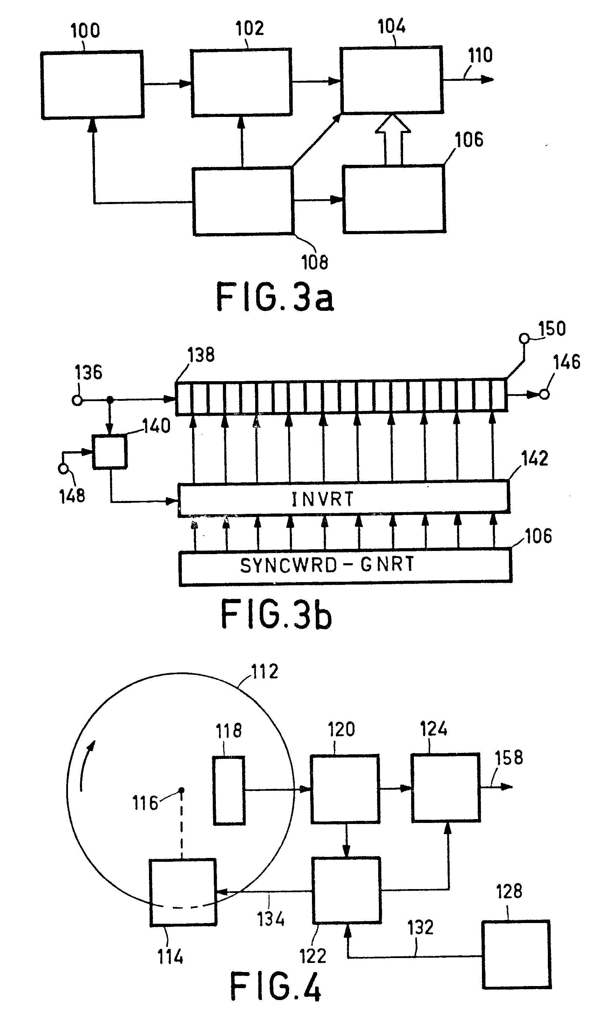

In diesem Zusammenhang zeigt Fig. 3a ein allgemeines Bild der Formierung der Information zu ihrer Speicherung auf der Beispielplatte (master). Der Block 100 stellt symbolisch eine Datenquelle dar: Er liefert unter der Steuerung von Taktsignalen aus dem Taktgeber 108 einen seriellen Datenfluß. Dieser ist bereits gemäß Datenwörtern plus Pseudosynchronisationswörtern organisiert und wird erzeugt, beispielsweise als würden die Speicherstellen eines Schreib/Lesespeichers mit direktem Zugriff (RAM) nacheinander gelesen, gefolgt von einer Parallel-Serienwandlung. Der serielle Datenbitfluß kann dabei einen beliebigen Dateninhalt besitzen. Das Element 102 ist ein Modulator. Dieser moduliert den Fluß, bestehend aus Datenbits plus Pseudosynchronisationswörter, nach den in Fig. 1, Zeile b, angegebenen Vorschriften zu ihrer Eignung für Speicherung auf dem Trägermedium. Die Modulation wird wieder durch Taktsignale aus dem Taktgeber 108 synchronisiert. So werden jeweils n Wörter zu dem moduliert, was im weitern immer mit Datenwörtern bezeichnet wird: Sie bestehen also aus je 21 Datenbitzellen von je zwei Codebits. Jeweils folgt einer Folge von n (8) Datenwörtern vom Modulationsergebnis ein Pseudosynchronisationswort: 12 Datenbitzellen von je zwei Codebits.

Das Element 104 ist ein Multiplexer mit zwei Eingängen und einem Ausgang. Ein Schema des Multiplexers 104 mit weiteren Einzelheiten ist in Fig. 3b dargestellt. Er enthält ein 20-Bit-Schieberegister 138 mit einem Eingang 136 und einem Ausgang 146. Die Bildung des eigentlichen Synchronisationsworts erfolgt mit Hilfe des Synchronisationswortgebers 106, der ein 20-Bit-Muster enthält, beispielsweise nach dem durchgehend gezeichneten Teil der Fig. 1, Zeile e: Wenn das Pseudosynchronisationswort die Konfiguration von Fig. 1, Zeile d, hat, wird an seiner Stelle das echte Synchronisationswort nach Fig. 1, Zeile e, eingesetzt. Wenn das Pseudosynchronisationswort die Konfiguration der Fig. 1, Zeile f, besitzt, wird an seiner Stelle das echte Synchronisationswort nach Fig. 1, Zeile g, eingesetzt. Insbesondere sind die letzten Signalwerte von Pseudosynchronisationswort und echtem Synchronisationswort immer untereinander gleich, damit nicht die Modulationsvorschriften verletzt werden. Zum Invertieren des im Element 106 gespeicherten Worts ist das Element 142 zwischengefügt: Es ist ein selektiv aktivierbarer und parallel arbeitender 20-Bit-Inverter. Er wird durch ein Datenbit aktiviert, das in der Bitstufe 140 gespeichert und aus dem Pseudosynchronisationswort abgeleitet ist: Es kann sich also um das Bit handeln, das in Fig. 1d, f ganz rechts angegeben ist. Die Speicherung in der Bitstufe 140 erfolgt einmal je Rahmen unter der Steuerung eines Aktivierungssignals am Eingang 148. So auch wird das Schieberegister 138 aktiviert; je Rahmen empfängt es $2 \times 180$ Schiebeimpulse, wodurch die Codebits jeweils eine halbe Datenbitzelle weitergeschoben werden und nach dem Durchlaufen des Schieberegisters am Ausgang 146 und weiter einmal je Rahmen am Eingang 150 erscheinen, um die parallel vorhandene Information des Synchronisationswortgenerators 106 zu übernehmen. Der Steuerimpuls am Anschluß 150 erscheint zwischen zwei aufeinanderfolgenden Schiebeimpulsen, wenn das Pseudosynchronisationswort (ohne die bereits erwähnten Funktionsbits »xx«) vollständig im Schieberegister 138 vorliegt. Die Bildung der Steuerimpulse an den Eingängen 148 und 150 kann durch die Decodierung einer Zählerstellung eines Zählers erfolgen, der die Schiebeimpulse aus dem Taktgeber 108 empfängt. So wird jeweils das Synchronisationswort auf eine vorgegebene Weise in den Rahmen parallel eingeführt, wobei das Pseudosynchronisationswort an der Stelle gelöscht wird. Das Synchronisationswort wird also nicht über den Modulator 102 geführt: Es entspricht nicht den Code-Einschränkungen des geänderten Miller-Codes. Insbesondere besitzt es zwei übergangsfreie Intervalle mit je einer Länge von 3 Bitzelle, durch die es eindeutig erkennbar ist.

In Fig. 4 ist ein Blockschaltbild für eine Leseanordnung für die Audioplatte dargestellt. Die Platte 112 wird auf ihrer Achse (116) von der geregelten Antriebsanordnung 114 angetrieben. Die Informationsspur auf der Platte wird von der Lese-Fokussierungs- und Einstell-Anordnung 118 ausgelesen. Das Element 120 empfängt die gelesenen Datenbits; dieses Element enthält u. a. eine Taktextraktionsanordnung; weiter bildet dieses Element durch Ausgleich von Ungleichmäßigkeiten in der Übertragungskennlinie der Auslesung und von Asymmetrie in dem beim Lesen gebildeten Signal das für Weiterverarbeitung geeignete digitale Signal. An sich sind diese Funktionen bekannt. Die so gebildeten Taktsignale gelangen an die Steueranordnung 122, die auf der Leitung 132 ein Taktsignal mit der gewünschten Taktfrequenz zur Bildung eines Regelsignals für die Antriebsanordnung 114 auf der Leitung 134 empfängt. Das Taktsignal auf der Leitung 132 wird vom Benutzertaktgeber 128 erzeugt, der ein selbstschwingendes Element mit der gewünschten Frequenz enthält. An sich bilden die bisher erwähnten Elemente keinen Teil der Erfindung. Der Datenbitfluß gelangt jetzt an die Synchronisationsanordnung 124: darin wird die Wortsynchronisation durchgeführt.

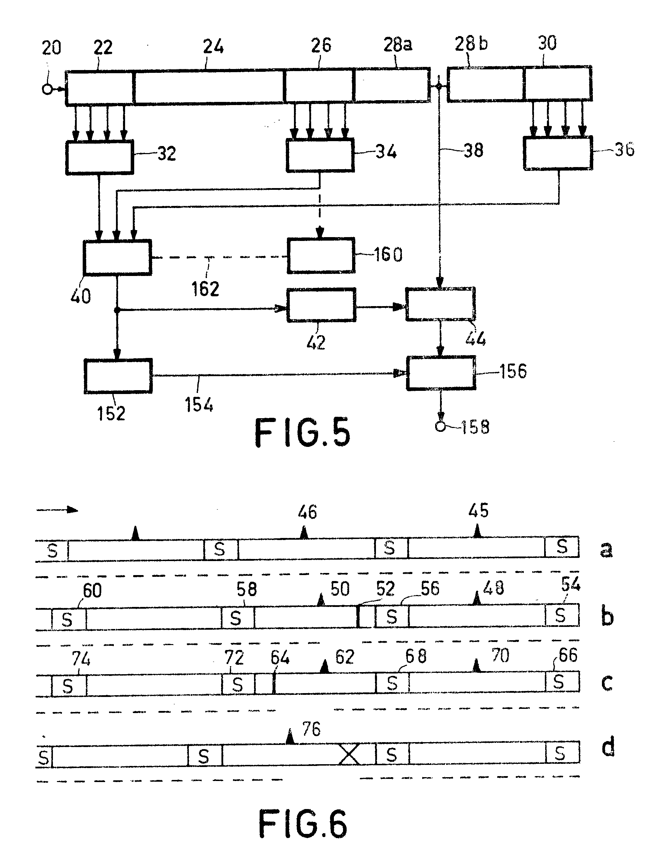

In Fig. 5 ist ein Blockschaltbild einer Anordnung zum Erzeugen eines Synchronisationssignals dargestellt. Die Information, die sowohl Dateninformation (Datenwörter) als auch Synchronisationsinformation (Synchronisationswörter) enthält, erreicht den Eingang 20. In diesem Beispiel ist das Format der Information nicht maßstabgerecht gegeben. Die Anordnung enthält ein Schieberegister mit den folgenden Sektionen 22, 24, 26, 28 und 30. Die Sektionen 22, 26 und 30 sind groß genug zum Aufnehmen eines Synchronisationsworts: es handelt sich also jeweils um 12 Bitzellen von je zwei Codebits. Die bereits beschriebenen Funktionsbits »xx« stehen am Anfang eines Synchronisationsworts: ggf. brauchen sie nicht mehr in die Sektion 30 hineinzupassen, weil sie bei der hier beschriebenen Synchronisation keine weitere Funktion erfüllen. Die Sektionen 24 und 28 haben beide eine Kapazität für 8 Datenwörter mit je zwei Codebits je Informationsbitzelle. Das Schieberegister hat einen Datenausgang bei der Leitung 38 und wird von einem Ausgangssignal der Steueranordnung 122 in Fig. 4 getaktet. Wie dargestellt, ist die Sektion 28 in zwei gleiche Hälften 28a, 28b unterteilt. Das Schieberegister ist bei den Sektionen 22, 26 und 30 jeweils mit einem Verzweigungssatz versehen, um in den Detektionselementen 32, 34 und 36 das Auftreten eines Synchronisationsworts zu detektieren: Sie können die Form nach Fig. 1, Zeile e und g, haben. Die zwei Funktionsbits »xx« brauchen für diese Detektion nicht berücksichtigt zu werden. Der Detektionsvorgang kann vorteilhaft dadurch erfolgen, daß ein Synchronisationswort zwei Sätze von je 7 aufeinanderfolgenden untereinander gleichen Codebits enthält. Die zwei Sätze dieser untereinander jeweils gleichen Codebits am Anfang und am Ende des Synchronisationsworts können möglicherweise in die Detektion einbezogen werden. Wenn eines der Detektionselemente 32, 34 und 36 ein Synchronisationswort detektiert, erzeugt es ein »1«-Signal und unter anderen Bedingungen eine »0«. Diese Signale gelangen an die Mehrheitsentscheidungsanordnung 40: Sie erzeugt eine logische »1«, wenn zumindest zwei der drei Detektionselemente 32, 34 und 36 ein Synchronisationswort detektieren. Das so gebildete Synchronisationssignal »1« gelangt an die Phaseneinstellanordnung 42. Diese bestimmt, ob das auf der Leitung 38 erhaltene Codebit das erste oder das zweite Bit einer Informationsbitzelle ist: durch das Synchronsignal wird die zu diesem Zeitpunkt auf der Leitung 38 vorhandene Information als das erste Codebit eines Informationsworts bezeichnet. Die Phaseneinstellanordnung erzeugt also das geradzahlige (ungeradzahlige) Signal am Demodulator 44, der jeweils für je zwei erhaltene Codebits ein Informationsbit zurückbildet. Das Synchronsignal der Mehrheitsentscheidungsanordnung 40 gelangt zum Zeitbestimmer 152: er enthält einen Zähler, der vom Synchronisationssignal in eine Anfangsstellung gebracht wird, anschließend $4 \times$ nach jeweils 21 Bitzellen den Anfang eines folgenden Worts angibt ($3 \times$ ein Informationswort und dann ein Synchronisationswort), dann nach 12 Bitzellen, darauf $8 \times$ nach jeweils 21 Bitzellen, dann wieder nach 12 Bitzellen usw., bis der Zeitbestimmer vom

Synchrsignal wieder in die Anfangsstellung gebracht wird. Ohne weitere Detektion der Synchronisationswörter von der Anordnung 40 kann dieser Zähler eine beliebige Anzahl Male zyklisch zählen. Die Synchronisation bleibt dabei aufrechterhalten, auch wenn Störungen in den Synchronisationswörtern auftreten, wenn wenigstens keine Bits ausfallen oder eingesetzt werden. Die Anfangssignale für die Datenwörter (und Synchronisationswörter, sofern nötig) werden beispielsweise von einem Decoder gebildet, der an den Zähler angeschlossen ist und dessen Ausgang den Ausgang des Zeitbestimmers 152 bildet: Anfangssignale erscheinen dabei auf der Leitung 154. Das Element 156 ist ein Serien-Parallel-Wandler. Dieser Wandler empfängt die Datenbits und die Bits der Synchronisationswörter des Demodulators 44 und enthält ein Schieberegister von 21 Bits. Durch ein Signal auf der Leitung 154 erscheint die gespeicherte Information parallel am Ausgang 158 für Weiterverarbeitung. Es ist weiter möglich, daß die Anfangssignale der Anordnung 152 nur dann erscheinen, wennn der Serien-Parallel-Wandler 156 gerade ein Datenwort enthält: Dabei sind die Synchronisationswörter am Ausgang 158 nicht mehr vorhanden. Die Weiterverarbeitung der letztgenannten Signale ist der Kürze halber nicht dargestellt. Die beschriebene Organisation kann andere Längen von Daten/Synchronisationswörtern angepaßt werden. Die Anzahl der Datenwörter zwischen zwei Synchronisationswörtern kann ungeradzahlig sein: Vorzugsweise bietet ein jeder der Teile 28a, 28b der Sektion 28 des Eingangsschieberegisters Platz für eine etwa gleiche Anzahl von Datenwörtern. Wenn jede Informationsbitzelle nur ein Codebit enthält, kann das Element 42 entfallen. Die Steuerung durch Taktimpulse ist in Fig. 5 nicht dargestellt. Die Elemente 152 und 156 empfangen immer 1 Taktimpuls je Informationsbitzelle, die Elemente 22 bis 30, 42 und 44 jeweils einen Taktimpuls je Codebit, also 2 je Bitzelle. Auch können die Detektionselemente 32, 34 und 36 und die Mehrheitsentscheidungsanordnung 40 einen synchronisierenden Taktimpuls ($2 \times$ je Informationsbitzelle) erhalten.

Eine andere Lösung für die Verwirklichung der Synchronisationsanordnung ist folgende. Das Ausgangssignal des Detektionselements 34 kehrt als Rückstellsignal zu einem Verzögerungszähler 160 zurück. Wenn er durch das Zählen der Taktimpulse eine Stellung erreicht, die der Länge eines Rahmens entspricht (8 Datenwörter plus 1 Synchronisationswort), liefert er ein Signal auf der Leitung 162 zur Mehrheitsentscheidungsanordnung 40. Dieses letzte Signal tritt an der Stelle des Ausgangssignals des Detektionselements 36. In diesem Fall können der letzte (in der Figur rechte) Teil 28b der Schieberegistersektion 28, die Schieberegistersektion 30 und das Element 36 entfallen. Dies wird bestimmt bei langen Rahmen eine Materialersparnis ergeben können. Durch diese Beschreibung ist jetzt die Synchronisationsanordnung 124 nach Fig. 4 implementiert. Das Prinzip des Verzögerungszählers kann auch hinsichtlich mehrerer Synchronisationswörter zusammen implementiert werden: Bei $k=3$ gibt es dann zwei Zähler oder auch einen Zähler mit zwei Ausgängen, die zum richtigen Zeitpunkt ein Synchronsignal erzeugen.

Die Anordnung nach Fig. 5 kann auf entsprechende Weise eine Mehrheitsentscheidung-aus-Fünf implementieren.

In Fig. 6 ist ein Muster von Daten- und Synchronisationsinformation angegeben und der einwandfreie oder falsche Synchronisationszustand veranschaulicht. In Fig. 6a ist ein Fall ohne Störungen angegeben: Die Buchstaben »s« geben jeweils die Stelle eines Synchronisationsworts an. Wenn die ganz rechts in dieser Figur dargestellten drei Synchronisationswörter detektiert werden, ist die Position der Anschlußleitung 38 in Fig. 5 durch die ganz rechte Pfeilspitze (45) gegeben. Unter der Steuerung der Taktimpulse wird dann die zwischen den Pfeilspitzen 45 und 46 vorhandene Information nacheinander am Ausgang 38 dargestellt. Wenn das nächste Mal drei Synchronisationswörter detektiert werden, ist die Position der Leitung 38 durch die Pfeilspitze 46 angegeben. Alle Information wird dabei auf Wortebene synchron detektiert, was durch die gestrichelte Linie bei Fig. 6a angegeben ist. In Fig. 6b ist ein Datenelement (1 oder mehrere Bits) ausgefallen; dies ist mit einem fetten Strich bei der Bezeichnung 52 angegeben. Die Synchronisation auf Wortebene ist jetzt ab der Pfeilspitze 48 (möglicherweise auch früher) bis zur Stelle des Ausfalls einwandfrei: Denn es werden zum Zeitpunkt der Übereinstimmung der Position des Anschlusses 38 mit der Pfeilspitze 48 zwei einwandfreie Synchronisationswörter detektiert (die Wörter 54 und 56). Wenn die Position des Anschlusses 38 von der Pfeilspitze 50 angegeben wird, werden wiederum zwei Synchronisationswörter einwandfrei detektiert (die Wörter 58 und 60), und von der Pfeilspitze 50 an ist die Synchronisation wieder einwandfrei. Nur der Teil zwischen dem Ausfall 52 und der Pfeilspitze 50 ist nicht einwandfrei synchronisiert: Dies ist durch das stellenweise Fortlassen der gestrichelten Linie angegeben.

In Fig. 6c ist ein Ausfall in der zweiten Hälfte eines Datenintervalls (bei 64) angegeben. Wenn sich der Ausgang 28 an der Stelle der Pfeilspitze 70 befindet, werden zwei Synchronisationswörter einwandfrei detektiert. Wenn sich der Ausgang 38 bei der Pfeilspitze 62 befindet, werden zwei Synchronisationswörter 72 und 74 einwandfrei detektiert. Es tritt also eine falsche Synchronisation zwischen der Pfeilspitze 62 und dem Ausfall 64 auf. In Fig. 6d ist ein eingesetztes Datenelement angegeben: Dies ist mit einem Kreuz bezeichnet. Von diesem Einsatz bis zur Pfeilspitze 76 ist dann eine falsche Synchronisation vorhanden.

Dem Erfindungsgedanken nach kann die Ausführung auf verschiedene Weisen geändert werden. So kann die Modulationsregel anders sein. Die Mehrheitsentscheidung kann auch über 5 Wörter erfolgen. Der Ausgang 38 braucht nicht genau in der Mitte zwischen den zwei Abzweigungen für die Detektion von Synchronisationswörtern angeordnet zu sein (beispielsweise wenn eine ungerade Anzahl von Datenwörtern je Rahmen vorhanden ist).

## Patentansprüche

1. Anordnung zum synchronisierten Lesen eines seriellen Mediums, das digitale Information in Form einer Reihe von Datenwörtern mit untereinander gleichen Längen und jeweils von einer gleichen Anzahl von n Datenwörtern (D0 ... D7) getrennter Synchronisationswörter (S) enthält, mit einem seriellen Speicher (22, 24, 26, 28a) zum Aufnehmen der Datenwörter und Synchronisationswörter von dem Medium in eine Folge von Teilspeichern, mit an den seriellen Speicher angeschlossen Detektormitteln (32, 34, 28b, 30, 36/160), um jeweils eine ungerade Anzahl $k \geqq 3$ von direkt aufeinanderfolgenden und einwandfrei erhaltenen, in ungestörtem Zustand einander entsprechenden und von allen in Datenwörtern zulässigen Mustern abweichenden Synchronisationswörtern zu detektieren, und mit an die Detektormittel angeschlossenen Mehrheitsentscheidungsmitteln (40), die durch eine Mehrheitsentscheidung zwischen diesen k Synchronisationswörtern ein Synchronisationssignal erzeugen, das bis zum Erzeugen des nächsten Synchronisationssignals gültig ist, dadurch gekennzeichnet, daß die genannte Folge von Teilspeichern besteht aus einem ersten Teilspeicher (22) zum Aufnehmen eines Synchronisationswortes, aus einer geraden Zahl $(k-1)$ seriell angeschlossener Teilspeicher (24, 26) zum Aufnehmen jeweils eines vorhergehenden Synchronisationswortes und der zwischen jeweils zwei aufeinanderfolgenden Synchronisationswörtern liegenden Datenwörter und aus einem Ausgangsteilspeicher (28a) zum Aufnehmen von p Datenwörtern, mit p als der nächsten ganzen Zahl von n/2, wobei der Ausgang des Ausgangsteilspeichers den Ausgang des seriellen Speichers bildet, der mit einem Serien-Parallel-Wandler (156) verbunden ist, der durch das Synchronisationssignal der Mehrheitsentscheidungsmittel über einen Zeitbestimmer (152) gesteuert wird.

2. Anordnung nach Anspruch 1, dadurch gekennzeichnet, daß die Detektormittel einen Zähler (160) enthalten, der für die Mehrheitsentscheidung über k Synchronisationswörter durch die Detektion des frühest erhaltenen Synchronisationswortes gestartet wird und eine Zykluslänge hat, die der Länge von n Datenwörtern plus einem Synchronisationswort entspricht und dessen Vollzählsignal als Detektionssignal des am frühesten erhaltenen Synchronisationswortes der Folge von k Synchronisationswörtern den Mehrheitsentscheidungsmitteln (40) zugeführt wird.

## Claims

1. A device for the synchronized reading of a serial medium which contains digital information in the form of a series of data words of equal length and synchronization words (S) which are separated each time by the same numer of n data words (D0 ... D7), comprising a serial memory (22, 24, 26, 28a) for the storage of the data words and the synchronization words from the medium in a series of sub-memories, comprising detector means (32, 34, 28b, 30, 36/160) which are connected to the serial memory for the detection of each time an odd number of k=3 directly successive and correctly received synchronization words which correspond in the non-disturbed condition and which differ from all patterns permissible in data words, and also comprising majority decision means (40) which are connected to the detector means in order to generate, by way of a majority decision between said k synchronization words, a synchronization signal which remains valid until the next synchronization signal is generated, characterized in that said series of sub-memories consists of a first sub-memory (22) for the storage of a synchronization word, an even number of (k−1) series-connected submemories (24, 26) for the storage of each time a preceding synchronization word and the data words each time situated between two successive synchronization words, and an output sub-memory (28a) for the storage of p data words, p being the nearest integer number of n/2, the output of the output sub-memory forming the output of the serial memory which is connected to a series/parallel converter (156) which is controlled by the synchronization signal of the majority decision means via a clock (152).

2. A device as claimed in Claim 1, characterized in that the detector means comprise a counter (160) which is started for the majority decision between k synchronization signals by the detection of the first synchronization signal received and which has a cycle corresponding to the length of n data words plus one synchronization word, its full count signal being applied to the majority decision means (40) as a detection signal of the first received synchronization word of the series of k synchronization words.

## Revendications

1. Dispositif pour la lecture synchronisée d'un milieu série qui contient de l'information numérique sous la forme d'une série de mots de données de longueurs égales l'une à l'autre et de mots de synchronisation (S) séparés chaque fois par un même nombre de n mots de données (D0 ... D7), comportant une mémoire série (22, 24, 26, 28a) pour enregistrer les mots de données et les mots de synchronisation du milieu dans une succession de mémoires partielles, des moyens de détection (32, 34, 28b, 30, 36/160) connectés aux mémoires séries pour détecter chaque fois un nombre impair k≧3 de mots de synchronisation qui se succèdent directement et qui sont reçus de manière parfaite, qui correspondent les uns aux autres dans un état non perturbé et qui sont différents de tous les modèles admissibles dans des mots de données, et des moyens de décision majoritaire (40) connectés aux moyens de détection qui, par une décision majoritaire entre ces k mots de synchronisation produisent un signal de synchronisation qui est valable jusqu'à la production du signal de synchronisation suivant, caractérisé en ce que la dite succession de mémoires partielles est formée d'une première mémoire partielle (22) destinée à enregistrer un mot de synchronisation, d'un nombre pair (k−1) de mémoires partielles (24, 26) connectées en série pour enregistrer chaque fois un mot de synchronisation précédent et les mots de données se trouvant chaque fois entre deux mots de synchronisation successifs, et d'une mémoire partielle de sortie (28a) pour enregistrer p mots de données, p étant le nombre entier le plus proche de n/2, la sortie de la mémoire partielle de sortie formant la sortie de la mémoire série qui est connectée à un convertisseur série-parallèle (156) qui est commandé par le signal de synchronisation des moyens de décision majoritaire par l'intermédiaire d'un dispositif de détermination du temps (152).

2. Dispositif suivant la revendication 1, caractérisé en ce que les moyens de détection comprennent un compteur (160) qui, pour la décision majoritaire prise sur k mots de synchronisation, démarre par la détection du mot de synchronisation reçu en premier lieu et présente une longueur de cycle qui correspond à la longueur de n mots de données plus un mot de synchronisation et dont le signal de comptage complet est appliqué aux moyens de décision majoritaire (40) à titre de signal de détection du mot de synchronisation appartenant à la succession de k mots de synchronisation qui est obtenu en premier lieu.

## FIG.1

| S | D0 | D1 | D2 | D3 | D4 | D5 | D6 | D7 |

## FIG.2

FIG.3a

FIG.3b

FIG.4

FIG.5

FIG.6